# EUROPEAN PATENT SPECIFICATION

(11) **EP 2 486 462 B1**
(45) Date of publication and mention of the grant of the patent: **09.04.2014**
(21) Application number: 10796128.6
(22) Date of filing: 30.09.2010
(51) Int. Cl.: G05B 19/4069

(54) **METHOD, COMPUTER SYSTEM AND COMPUTER PROGRAM PRODUCT FOR MACHINING SIMULATION AND FOR VISUALLY PRESENTING SUCH SIMULATION**
VERFAHREN, COMPUTERSYSTEM UND COMPUTERPROGRAMMPRODUKT ZUR SIMULATIONSVERARBEITUNG UND ZUR VISUELLEN DARSTELLUNG EINER DERARTIGEN SIMULATION
PROCÉDÉ, SYSTÈME INFORMATIQUE ET PRODUIT-PROGRAMME D'ORDINATEUR POUR UNE SIMULATION D'USINAGE ET POUR UNE REPRÉSENTATION VISUELLE D'UNE TELLE SIMULATION

(30) Priority: 06.10.2009 HU 0900636; 29.10.2009 HU 0900679
(43) Date of publication of application: 15.08.2012
(73) Proprietor: Pécsi Tudomànyegyetem, 7622 Pécs (HU)
(72) Inventor: TUKORA, Balázs, 7627 Pécs (HU)
(74) Representative: Harangozo, Gabor
(86) International application number: PCT/HU2010/000104
(87) International publication number: WO 2011/042764

(56) References cited:
- Jeremy A. Carter, Thomas M. Tucker and Thomas R. Kurfess: "3-Axis CNC Path Planning Using Depth Buffer and Fragment Shader", Computer-Aided Design & Applications, vol. 5, no. 5 2008, pages 612-621, XP002625191, Retrieved from the Internet: URL:http://www.cadanda.com/CAD_5_5__612-62 1.pdf [retrieved on 2011-02-28]

## Description

Numerically controlled (NC) milling technology is widely used to process raw workpieces with high accuracy. To perform milling operations so precisely and reliably as possible, nowadays it is essentially necessary to complete a prior computer simulation of such operations, which by means of modeling the physical properties (in particular, the three dimensional shape and the material characteristics) of the tool and the workpiece, allows to recognize possible deficiencies arising during the milling operation, such as milling process errors, collisions, inappropriate milling parameters, etc., even before actually completing a particular operation. In this way, some of the manufacturing errors, such as uneven machining of the workpiece, damage of either the workpiece or the tool, etc., may be avoided, which errors would otherwise adversely affect the cost and the efficiency of the production.

A method for computer simulation of the milling process is disclosed, inter alia, in the patent No. US 5,710,709. The simulation method disclosed in this document is based on the generation of a so called dexel representation of the workpiece and the tool. In this method, the dexel representation contains a plurality of dexels generated in one direction, wherein the neighbour dexels are stored as neighbour elements of a data matrix, whereas subsequent dexels belonging to a particular straight line are stored in a chained manner. In this method, a dexel representation of the milling tool or of the volume swept by the miling tool (swept volume) at the actual position of the tool is computed step by step while the tool advances in the workpiece, and the difference between the dexel representation of the workpiece and that of the milling tool is then determined. Based on the dexel representation of the workpiece thus obtained, a modified shape of the workpiece is determined, and this shape is then presented on a display by using appropriate computer graphic methods. For the visualization, positions of the surface points of the workpiece and those of the tool are mapped into the coordinate system of the display.

The generation of an original dexel-based representation, which has been used conventionally and widely, includes the following steps. A grid with a given grid spacing is projected to a three dimensional plane, and from each grid point, a straight line is directed perpendicularly to that plane. In the following step, intersection points of the straight lines and the body, for example, a workpiece, are examined. Where a straight line intersects the surface of the body, a dexel (i.e. a depth element) is generated that is defined by the spatial coordinates of the point of entering into the body and the spatial coordinates of the point of leaving from the body, or other values derivable therefrom (for example, the coordinates of the entering point and the direction and the length of the dexel), and optionally by other additional parameters, such as the color, the material characteristics, etc. In case a straight line intersects the body multiple times, the subsequent dexels along the straight line are stored in the memory in a chained manner.

The study of Benouamer et al., "Bridging the gap between CSG and Brep via a triple ray representation" (Proceedings of the fourth ACM Symposium on Solid modeling and applications, pp. 98-97, Atlanta, USA, 1997, ISBN:0-89791-946-7) introduces a method for computer modeling of mutual penetration of algebraic surfaces, wherein for an even more accurate three dimensional visualization of the solid body, a so called multi-dexel representation is generated along multiple directions on the basis of a so called boundary representation (BRep) that describes the relations between the boundary elements (e.g. lateral surfaces, edges, peaks) of the solid bodies. In this study, the dexels are generated in three mutually orthogonal directions, which is the so-called tri-dexel or multi-dexel method. Dexels belonging to a particular direction fully describe the body by themselves, thus three complete dexel-based descriptions are generated for the various directions. From the multi-dexel representation, the three dimensional surface of the solid body to be visualized is recovered by using the well-known Marching Cube algorithm. The adaptation of the Marching Cube algorithm to a multi-dexel data structure is introduced in the study of Ren et al., "Feature Conservation and Conversion of Tri-dexel Volumetric Models to Polyhedral Surface Models for Product Prototyping" (Computer-Aided Design & Applications, 5(6), 2008, pp. 932-941) in detail. According to this document, from a multi-dexel based representation, a temporary data structure is generated, in which the parameters assigned to the grid cells of a spatial grid defined by the intersection points of the dexels are stored. The Marching Cube algorithm is then run by using these data, by exploiting the known neighborhood relations between the dexels.

The study of Carter et al. "3-Axis CNC Path Planning Using Depth Buffer and Fragment Shader" (Computer-Aided Design & Applications, 5(5), 2008, 612-621) discloses a CNC tool path planning technique wherein the dexels are stored dependently of each other regarding their neighborhood relations.

It is an object of the present invention to provide a computer simulation method wherein mutual penetrations between a workpiece and a tool may be computed much more efficiently as compared to the prior art methods, and thus an arbitrary computing accuracy may virtually be achieved.

It is an other object of the present invention to provide a method for computer simulation that is adapted for three dimensional graphical visualization of a numerical model of a workpiece generated by the aforementioned novel computing method.

Finally, further objects of the invention are to provide a computer simulation system for carrying out the novel methods, as well as to provide a computer program product to perform these methods.

The above objects are achieved by a simulation method according to claim 1, a visualization method according to claim 4, a computer system according to claim 6 and computer program products according to claims 7 and 8. Preferred embodiments of the methods and the system according to the invention are specified by the dependent claims.

The present invention will now be described in detail through preferred embodiments with reference to the accompanying drawings, in which:
Figure 1 is a flow diagram illustrating the basic steps of the simulation method according to the invention;
Figure 2 is a schematic view illustrating the depth peeling method along one direction for a cylindrical ring shaped body;
Figure 3.a is a schematic illustrates the generation of dexels along one dexel direction for the body shown in Figure 2;

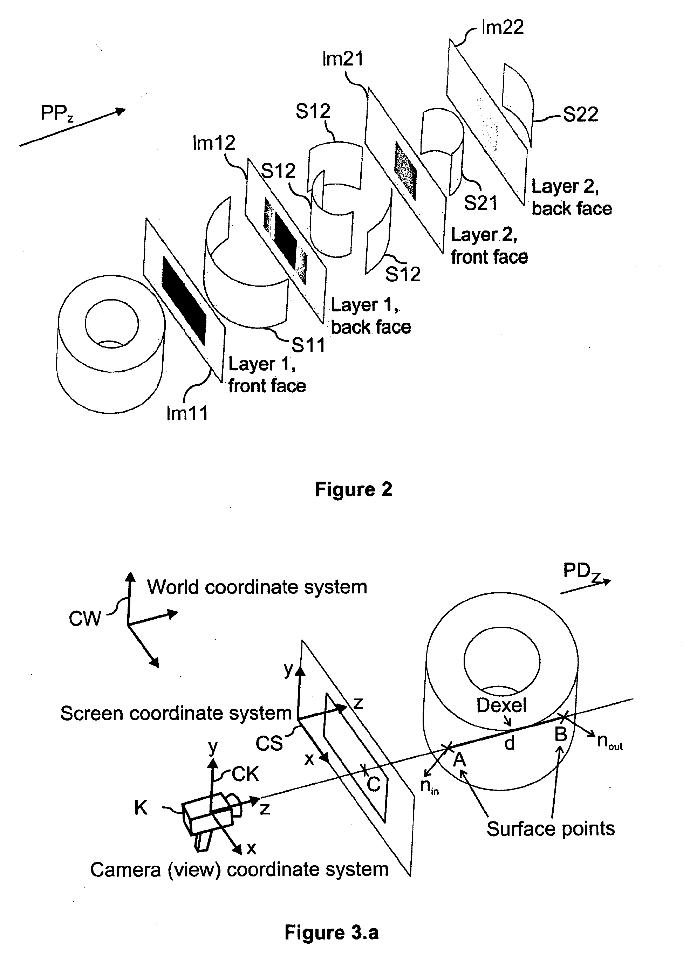

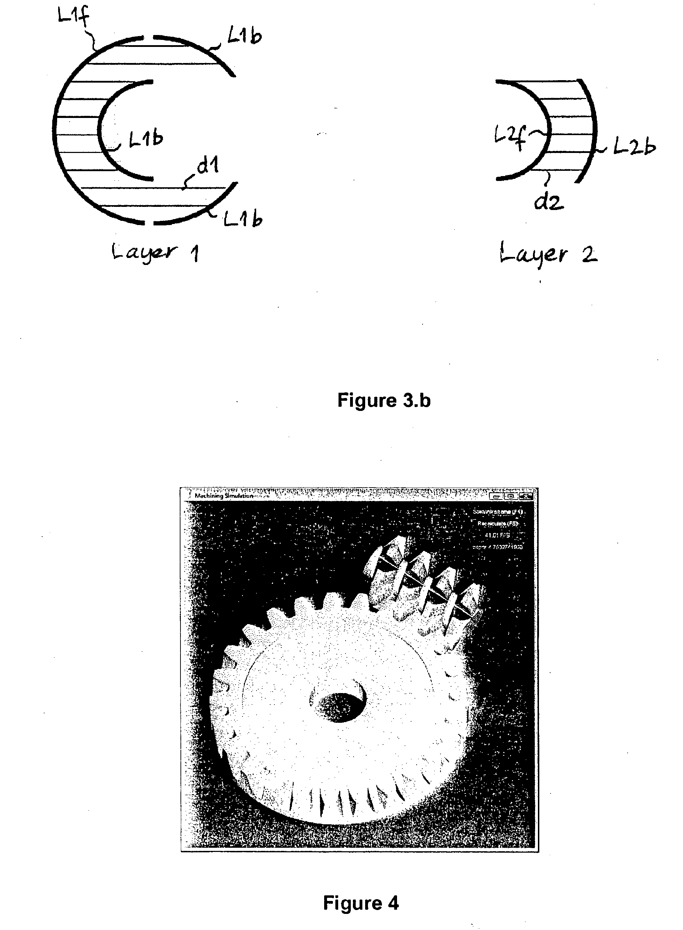

Figure 3.b schematically illustrates the relation between the dexels and the surface layers in a cross-sectional view of a workpiece along the dexel direction shown in Figure 3.a;
Figure 4 is a perspective view of a highly complex tool and a workpiece partially milled by the tool;

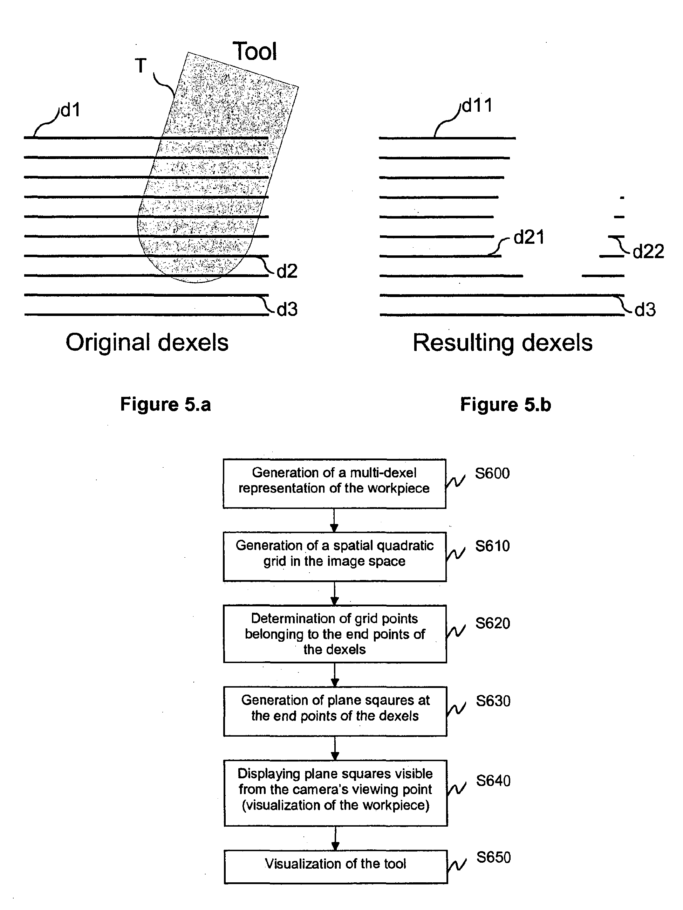

Figures 5.a and 5.b illustrate the change of the dexels when a tool penetrates into a workpiece;

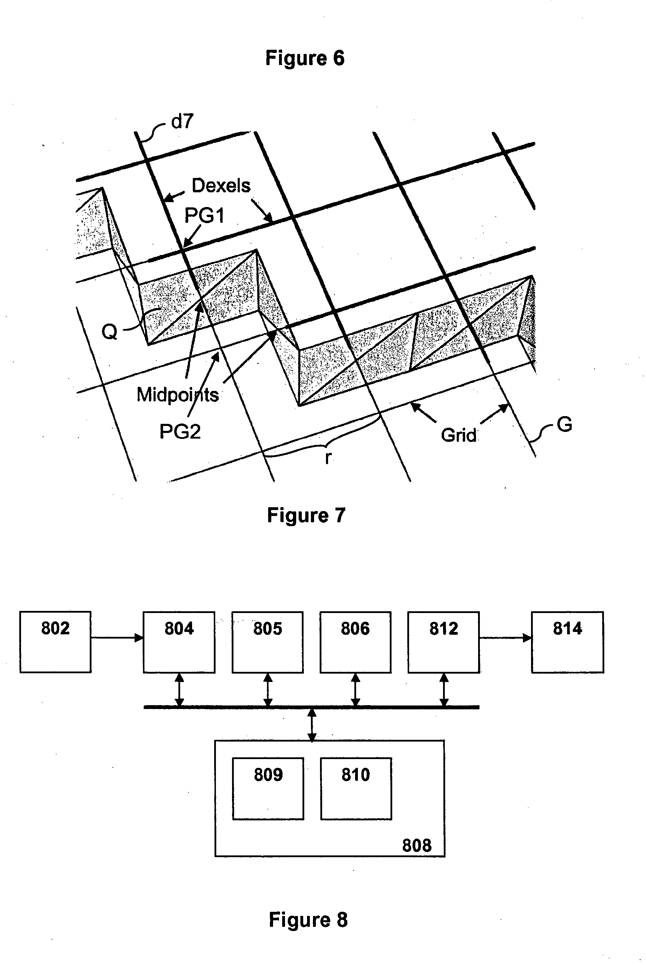

Figure 6 is a flow diagram illustrating the basic steps of the visualization method according to the invention;
Figure 7 schematically illustrates the objects of the visualization according to the invention; and
Figure 8 is a functional block diagram of the computer system according to the invention.

The simulation method according to the invention is adapted for computer modeling of milling-type processing of free-formed bodies. The term "free-formed" typically refers to *manifold* bodies (i.e. real three-dimensional bodies defined in a CAD system). The process is carried out by using a milling tool, the position and the orientation of which can be adjusted arbitrarily and in a synchronized manner during the process. The simulation method according to the invention is therefore suitable for the simulation of a milling process carried out by using a five-axis milling machine.

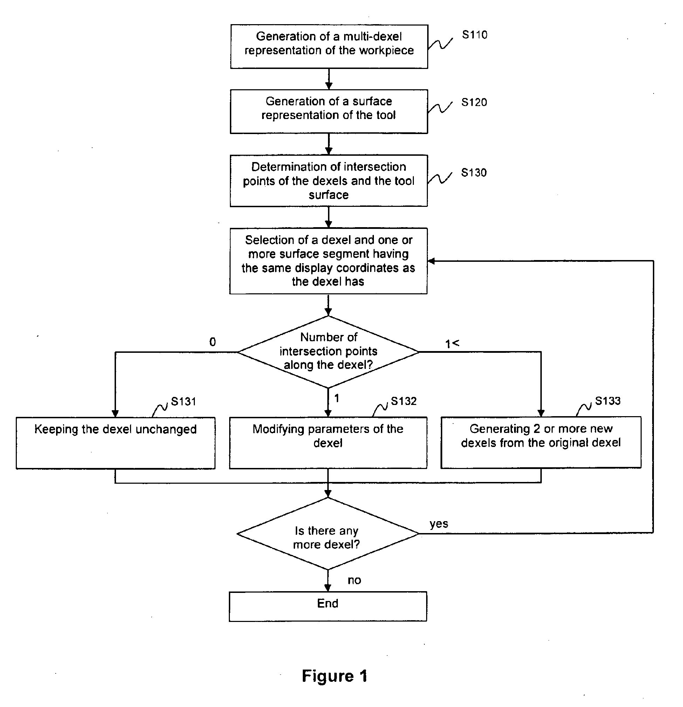

The basic steps of the simulation method according to the invention are illustrated by the flow diagram shown in Figure 1.

In step S100 of the simulation method, the spatial shape of the workpiece is described by means of a so called dexel-based volume representation method, in particular, by means of a specially modified version of the multi-dexel representation known from the prior art.

A multi-dexel based description of the initial workpiece (i.e. raw workpiece) is generated from a well known BRep representation that describes the surface of the workpiece. Such a representation may include, for example, the method applied in the field of stereo lithography for describing the surface of a workpiece by triangles and normal vectors, the method storing the three dimensional surface representation in a file of standard format with .stl extension.

In the present case, the conversion from a BRep representation of the surface of the workpiece into a multi-dexel representation thereof is performed in the following way. The BRep object describing the workpiece is divided into a plurality of layers by applying the so called depth peeling method, which is also well known in the art, along the directional vectors of the dexels that will be obtained later, i.e. in case of the generation of a three-directional dexel representation, the layers are generated along three mutually orthogonal directional vectors. The principle of the depth peeling method is illustrated in Figure 2, where for a better understanding, the surface of a rather simple workpiece, i.e. a cylindrical ring shaped body, is divided into separate layers, said layers being defined by front surface segment and associated rear surface segment. As shown in Figure 2, the workpiece is rendered in a projecting direction PP_{z} (i.e. an image is taken thereof), and the distance r between the camera K and the points of the surface section S11 that is visible for the camera K, as well as the respective normal vector n are stored in the form of an image Im11, and then a similar image Im12 is also generated for the hidden surface segment S21 facing to the user, said surface segment S21 being behind the surface segment S11, which is visible for the camera K. This rendering operation is repeated until the rearmost hidden surface segment is reached. The procedure is repeated for the rear surface segments S12 and S22 of the workpiece as well. The front and the rear surface segments S11, S12, which situate nearmost with respect to the viewer, constitute the first layer, whereas the farthest ones constitute the last layer, i.e. in the present case, the surface segments S21, S22 form the second (farthest) layer. Although for the sake of simplicity, the surface layers of the workpiece are generated along only one direction in Figure 2, in the simulation method according to the invention, the depth peeling method is carried out along all the three orthogonal directions, thus three independent surface representations are generated for the entire surface of the workpiece.

In the next step S110, the dexels are generated on the basis of the images of the front and rear surface segments of each layer of the workpiece. The way of generation of the dexels is schematically illustrated along the dexel direction PD_{z} in Figures 3.a and 3.b. The virtual spatial coordinates of the penetration point and the leaving point of a dexel d can be calculated from the display coordinates x, y of a point C of an image I made by the camera K for the intersection points A and B of the directed straight line and the images of the front and rear surface segments intersected by said straight line, as well as from the z-directional depth coordinates determined for the point C of the image I. The virtual spatial coordinates are generated by a transformation from the display coordinate system CS into the world coordinate system CW, and as the normal vectors of the dexel d, the normal vectors stored for the same respective display coordinates are used. The conversion is performed in each of the three dexel directions respectively. (In Figure 3, for the sake of simplicity, the generation of dexels is illustrated only along one dexel direction.) As shown in Figure 3.a, the world coordinate system CW is regarded as a base system, and all of the objects are related to this base system in the virtual space. The images I are generated according to the position of the camera coordinate system CK, the image frames of which are described by coordinates defined in the display coordinate system CS. Consequently, the point C shown in Figure 3.a is defined by the display coordinates of the display coordinate system CS. In the present case, the information associated with a particular pixel of the image I made by the camera K includes the normal vector of the surface point associated with the particular pixel for the given surface segment of the workpiece and the distance between the camera K and the surface point associated with said pixel.

At the generation of a dexel representation of the workpiece, the camera K is fixed in a predetermined first virtual camera position in each of the three directions x, y and z. The dexels are captured in each direction x, y and z along straight lines starting from the grid points of an imaginary quadratic grid having a predetermined grid spacing r.

In Figure 3.b, the relation between the dexels and the surface segments is schematically illustrated in a cross-sectional view of the workpiece along the dexel direction PD_{z} shown in Figure 3.a. In the direction z, a plurality of dexels d1 extending parallel to each other and, in this example, having different length, is generated between the front surface segment L1f forming the first surface layer of the workpiece, and the three rear surface segments L1b associated with said front surface segment. Between the front surface segment L2f and the rear surface segment L2b, which together form the second surface layer, a plurality of dexels d2 is generated, said dexels d2 extending parallel to each other and also to dexels d1 and, in the present example, having different length. Upon completing the dexel generation for each of the three (depth peeling) surface representations, three independent dexel representations are obtained.

In the simulation method according to the invention, the data structure describing a dexel comprises at least the following data: information describing the spatial position and the direction of the dexel, preferably the display coordinates and the depth coordinates thereof, and geometric information relating to those surfaces of the workpiece that are intersected by the dexel at the starting point and the end point of the dexel. The information defining the spatial position and the direction of the dexel may be specified by the coordinates of any one of the aforementioned coordinate systems, for example by world coordinates, since the coordinates of each of said coordinate systems can be mapped into any other coordinate system according to a unique correspondence.

In a preferred embodiment of the method, the following data are stored for each of the dexels: coordinates of the point of penetration into the workpiece, defined in the world coordinate system CW, the normal vector nᵢₙ of the surface intersected at the point of penetration into the workpiece, the length of the dexel d and the normal vector nₒᵤₜ of the surface intersected at the dexel's point of leaving from the workpiece, wherein the display coordinates of the dexel and the depth coordinates of the end points of the dexel can be calculated from the world coordinates and the length of the dexel according to a unique correspondence. Beyond these parameters, the data structure of the dexel preferably includes other parameters as well, such as parameters describing material characteristics. The direction of the dexels is defined as a common parameter for the group of dexels extending in the same direction.

Another novel feature of the multi-dexel representation applied in the simulation method according to the invention is that each dexel is stored independently of each other, thus the spatially consecutive dexels belonging to the same straight line are not chained and no neighborhood information is either stored for the neighbor dexels. This allows a parallel processing of the dexels independently of each other, as it will be described in more detail below, at the computation of the mutual penetration of the workpiece and the tool, as well as at the visualization of the workpiece.

In the next step S120 of the simulation method according to the invention, the surface of the tool is divided into layers by using the well-known depth peeling method as described above in detail, based on the initially available BRep surface representation of the tool, wherein each of the layers is formed by respective surface segments of the tool and wherein said layers unambiguously define the three dimensional surface of the entire tool or of the part of the tool concerned by the simulation, and also define the spatial extent of the tool defined by its three dimensional surface. Regarding the invention it is particularly preferred that the BRep surface representation of the tool is available for the visual presentation thereof even before the simulation. The BRep surface representation of the tool and similarly, that of the workpiece are practically generated by using a CAD system.

In the depth peeling method used to divide the tool's surface into layers, in order to generate a three dimensional image on the basis of three orthogonal directions, the camera is always fixed in the same virtual camera position as applied for the generation of the dexel representation of the workpiece. As a result, due to the coincidence of the corresponding camera coordinate systems, the display coordinate system of the workpiece and that of the tool will also coincide, which has an importance in the modeling of the milling process, as it will be described in detail below.

Using the depth peeling method for the spatial representation of the tool allows to perform milling simulations by using a tool of any degree of complexity. Such a tool is, for example, a gear hob shown in Figure 4, the spatial representation of which could be described before in a very complicated, conventional analytic form, which required extraordinary high computational power for modeling of the milling process using such a tool. Therefore, so far it has been practically impossible to run a milling simulation using a tool of such a high complexity in real time.

In the subsequent steps of the simulation method according to the invention, calculations for modeling of the milling process will be done on the basis of the above described multi-dexel spatial representation of the workpiece and the spatial representation of the penetration volume or the swept volume of the tool.

In the simulation, the penetration volume of the tool penetrating into the workpiece or the volume swept by the tool corresponding to the various sections of the tool's motion is removed from the volume of the workpiece step by step along the tool path. In case of a workpiece described by a dexel-based spatial representation, it means that in step S130, the intersection point of the respective layers of the tool (i.e. the relating surface segments obtained from the depth peeling method) and the dexels of the workpiece are determined for each dexel, and based on said intersection points it is determined how the particular surface segments of the tool modify the respective dexels of the workpiece.

If in step S131, it is determined that the surface layers concerned do not intersect the particular dexel, then the dexel will be left unchanged.

If in step S132, it is determined that only one surface segment (either a front one or a rear one) of the tool intersects the particular dexel, then this dexel of the workpiece will be shortened and the parameters of the dexel will respectively be modified. This occurs typically when the tool removes a certain volume from the surface of the workpiece, i.e. when a rear or front surface segment of a surface layer of the tool intersects the dexel along a predetermined dexel direction.

If in step S133, it is determined that more than one surface segment of the tool intersects a particular dexel of the workpiece, then new dexels are generated from said particular dexel, which new dexels will be stored also independently of each other, i.e. without associating neighborhood information therewith, together with their respective dexel parameters. This occurs typically when the tool needs to make a deeper cut into the surface of the workpiece, i.e. when one of the front surface segments and one of the rear surface segments of the tool both intersect said particular dexel along a given dexel direction.

In Figures 5.a and 5.b, a change in the dexels is illustrated at the tool's penetration into the workpiece. In Figure 5.a, the initial dexels and the penetration volume of the tool T can be seen before the penetration. In Figure 5.b, the dexels modified by the surface segments of the tool T are illustrated after the tool's penetration. For example, from dexel d1, a shorter dexel d11 is generated and from dexel d2, two (shorter) dexels d21, d22 are generated, whereas dexel d3 remains unchanged.

Modeling of the milling process is based on the comparison of the display coordinates associated with the dexels of the workpiece and the display coordinates obtained from the images describing the surface layers of the tool, in the following way. Since the depth peeling method required to generate dexels of the initial workpiece and the depth peeling method performed to provide surface layers of the tools are carried out by using the same virtual camera positions and applying the same camera parameters, it will be true that those dexels and those tool surface points that have the same display coordinates all align to the same spatial straight line. As the dexel data are stored with associated display coordinates that were obtained at the generation of the dexels, the dexels are now compared only to those surface points of the tool that have the same display coordinates as the dexels have. The following task is then limited to the determination whether the surface points of the tool are positioned within the dexel concerned along the particular straight line. Since the distance between the surface points of the tool and the camera have been stored in the depth image (in the form of depth coordinates) and the spatial coordinates of the end points of the dexels are known in any one of the coordinate systems, the above comparison can be performed easily. For example, in the camera coordinate system, comparison of the depth coordinates may be completed by the comparison of the distances measured from the camera. This procedure is to be successively accomplished for all the three groups of dexels, each group including those ones of the dexels that belong to the same direction. Comparison of the dexels and the surface layers is always carried out with respect to dexels and tool layers belonging to the same direction. Additionally, since the dexels are independent of each other, it is possible to simultaneously determine the intersection points of a high number of dexels and surface layers by means of parallel processing. By using an appropriate computer hardware (e.g. a dedicated graphical processing unit), modeling of the milling process may be performed at a speed that is higher by several orders of magnitude relative to the speed of the prior art methods, which allows a real time simulation even with a tool of extraordinary high complexity. Another advantage of the above mentioned computing method is that the analytical computation (for example, using the method of coordinate geometry) of the intersection points defined be the dexels of the workpiece and the surface layers of the tool can be eliminated.

As a result of the aforementioned computations, during the advancement of the tool, in each simulation step, a further modified multi-dexel representation is generated for the workpiece in steps S131 to S133, said multi-dexel representations unambiguously defining the three dimensional extent of the workpiece in any tool position, i.e. defining a volume representation of the workpiece for each simulation step.

While above the steps of the simulation modeling of the milling process have been described, a visualization method for the 3D graphical presentation of a partly or entirely processed workpiece obtained from the milling simulation method of the invention will be described below in accordance with the present invention. The basic steps of the method are illustrated in the flow diagram of Figure 6, whereas the objects used for the visualization are schematically illustrated in Figure 7.

The volume representations of the workpiece shaped by milling are visualized after one or more computing cycle in the following way.

In the first step S600 of the method a (modified) volume representation of the milled workpiece is generated according to the simulation method of the invention as described in detail above. In the visualization method it is assumed that the shape of the tool does not change, thus the tool is always to be visually presented with its original shape. Optionally, changes in the shape of the tool (for example, due to its wearing) may also be modeled during the milling simulation, however, to this end, the surface representation of the tool should be generated again in every simulation step by taking the interactions to the workpiece into account.

In the next step S610, a three-dimensional quadratic grid is defined in the image space to be presented, said grid having a grid spacing equal to the grid spacing r applied for the generation of the dexels of the workpiece, and wherein the lines of the spatial quadratic grid are aligned with the dexels. A three-dimensional grid G matched to the dexels is illustrated in Figure 7, in which for the sake of simplicity, only a part of one plane of the three-dimensional quadratic grid G is illustrated.

Subsequently, in step S620, for each of the three directions and for each of the dexels belonging to a particular direction, two grid points of the three-dimensional grid G are determined, between which grid points the starting point and the end point of the dexel accommodate. For example, one end point of the dexel d7 shown in Figure 7, is between the grid points PG1 and PG2. If the end point of the dexel situated exactly at the grid point PG1, the dexel would be regarded as having its end point within the section defined by PG1 and PG2.

In step S630, for the section between two grid points belonging to the end point of a dexel (for example, dexel d7), a plane square Q is defined, the center of which coincides with the center of said grid section, and the normal vector of which faces to that grid point of said grid section that is not reached by the dexel (for example, in case of dexel d7, this grid point is PG2). The side edges of the square Q are parallel to the grid lines that are perpendicular to said dexel, and the length of these side edges is equal to the grid spacing r.

Upon generating the squares Q for each dexel in all the three directions, an approximation of the three dimensional surface of the workpiece will be obtained. From among the plane squares Q constituting a thus obtained closed surface, those will be displayed in step S640 on a display, for example, on the display of a computer, that are visible from the viewing point of the camera, thereby an image of the workpiece as viewed from a desired direction may be displayed.

Finally, in step S650, the tool is also visualized in the respective milling position.

The surface of the workpiece and the surface of the tool may be shadowed according to preset illumination conditions, thus their spatial appearance could be enhanced.

In order to improve the speed and the quality of visualization, it is preferred that only those plane squares are generated and displayed, the normal vector of which and the normal vector of the associated dexel end point of which are both directed toward the viewer (that is, the scalar product of the surface's normal vector and the so called z-vector of the camera pointing towards the depth direction of the image is less than zero). For shadowing the surface, the normal vectors associated with the end points of the dexels are used.

The visualization method described above allows to perform the milling simulation steps at an arbitrary high image resolution (or magnification) together with increased particularity. To this end, however, when dividing a magnified part of the workpiece into layers and generating the multi-dexel volume representation of the workpiece, the grid spacing related to the size of the workpiece should be reduced and accordingly, the length of the side edges of the plane squares used for the visualization method should also be decreased. Thereby the particularity of the displayed image will increase. Since for the milling process, the depth peeling method is used for the generation of a volume representation of both the workpiece and the tool, the camera settings used to produce the tool's surface layers should be the same as those to be used at the magnification of the workpiece.

Now the structure and the major functions of the computer system suitable for carrying out the simulation method and the visualization method according to the invention will be described with reference to Figure 8, which illustrates a functional block diagram of the computer simulation system according to the invention.

The computer simulation system 800 of the present invention, which is adapted to milling simulation (i.e. modeling and visualization of the milling process) of free-formed bodies in a three dimensional computer graphics system, comprises an information input means 802, an input interface 804 for receiving control signals to operate the simulation system, a first data storage mens 805 for storing initial data and instructions to be carried out by the simulation method, a CPU 806, a graphical hardware unit 808, an output interface 812 for transmitting image data to a display for presenting the simulation results and a display 814. In the system according to the invention, the CPU 806 is primarily used to control the operation of the information input means 802 and the display 814, as well as to control utilization of the resources of the entire system. The graphical hardware unit 808 comprises a graphics processing unit 809 (GPU) and a second data storage means 810 for its own purposes. The display 814 typically includes a computer display, but it may also include the graphical display of an NC lathe.

The computer system incorporates the most advanced graphical hardware units, i.e. the so called unified architecture graphical hardware units. The unified architecture means that the programs executing various tasks and running on the graphical hardware (also referred to as *shaders)* run on the same hardware unit independently of the task to be completed, rather than running on separate dedicated units specifically developed for various tasks. The shaders are used by higher level applications running on the computer, but instead of the computer's central processing unit (CPU), they are rather run on the graphics hardware (i.e. Graphics Processing Unit, GPU). The shaders perform various tasks: the so called *vertex shadres* typically perform coordinate transformation with respect to the surface vertex points of a three dimensional object to be presented on the display and they also manipulate other attributes of said object (for example, by setting its color according to the specific illumination conditions). The so called *pixel shaders* perform operations on the pixel set represented on the display.

The unified hardware architecture also allows to define other shaders, including even non-graphical shaders as well, beyond the conventional vertex and pixel shaders. For example, the so called *geometry shader* is adapted to process geometrical primitives (points, lines, triangles), including transformation, modification, deletion thereof as well, to create such primitives individually, without using the CPU. This latter operation could not have been performed before the appearance of the unified architecture. The results of the operations can be even visualized by the graphics hardware by using other types of shaders. The programmer can thus create and manipulate any object by using only the graphics hardware, thereby moving all these functions from the CPU into the shaders. This approach has the advantage that SIMD (Single Instruction on Multiple Data) instruction sequences can be executed at a much higher speed on the graphic hardware developed for highly parallel computing, as compared to a CPU, and moreover, by minimizing the data exchange between the CPU and the GPU, the effect of the limited data transmission bandwidth that decreases the running performance can also be reduced.

The unified architecture graphics hardware is generally called GPGPU (General Purpose Graphics Processing Unit), referring to its applicability not only to graphical tasks. The general purpose use of such units is supported by special programming interfaces, the so called API's (Application Programming Interfaces).

The basic steps of the simulation method and the visualization method according to the invention are performed by the GPU 809, in cooperation with the CPU 806 if necessary. On the basis of the instructions and the initial data stored in data storage means 805, the GPU 809 is adapted to generate a volume representation for the workpiece and the tool as described above, and also to modify the multi-dexel volume representation of the workpiece on the basis of the instructions stored in the data storage means 805 and of the control signals received from the information input means 802 through the input interface 804. The GPU 809 is further adapted to generate, in each simulation step, image data representing the actual three-dimensional models of the workpiece and the tool on the basis of the actual volume representations of the workpiece and the tool, respectively.

In the computer simulation system according to the invention, the aforementioned components have the following functions.

The dexels representing the workpiece are stored in a dedicated memory 810 of the graphics hardware unit 808 in the form of so called vertex buffers (i.e. data structures describing the object's vertices).

The conversion between the BRep representation and the multi-dexel representation of the workpiece is done partly by the GPU 809 and partly by the CPU 806, through a highly parallel processing of the depth peeling method in the GPU 809. The milling computations are preferably performed by a shader running on the GPU 809 for sequent positions of the tool along its path, which means that preferably, the CPU 806 does not take part in the computations. Unlike the CPU 806, the GPU 809 is adapted for a highly parallel processing to modify the independent dexels in the course of the simulation process, thus virtually, any image resolution can be achieved within a reasonable processing time. Additionally, in the visualization process, the conversion of the dexel representation into volume primitives may also be performed by a shader. In this case, there is no data exchange between the CPU 806 and the GPU 809, unlike in the prior art solutions, in which the geometric data of the modified workpiece was read from the computer memory (corresponding to the data storage means 805 in our example) and transferred to the GPU 809 for the visualization thereof.

The above described system architecture allows to run the milling simulations using a tool of high complexity in real time by performing the methods according to the invention. (In the dexel-based methods, the volume of the tool was computed analytically. Although in the milling simulations using three axes, the volume of the tool was also represented by depth images, and this volume was removed from the volume of the workpiece also represented by depth images, such prior solutions used only one layer in each direction, therefore such an approach was not suitable for free-formed workpieces and/or tools. However, an extension of these prior solutions to the use of multiple layers in each direction could not be done at all by using conventional hardware means.)

The present invention further relates to a computer program product which comprises instructions stored on a computer data storage medium, said instructions, when loaded into a computer, cause said computer to carry out the steps of the methods according to the invention.

## Claims

1. A method for milling process simulation performed on a free-formed body, wherein
in a graphical processing unit, generating a three-dimensional multi-dexel representation of a free-formed body to be processed, by using three orthogonal depth peeling algorithms at a predetermined virtual camera position for each dexel direction and a predetermined grid spacing (S110),
generating a volume representation of the tool or a volume representation the swept volume of the tool by using three orthogonal depth peeling algorithms (S120) with the same virtual camera positions as applied for said free-formed body to be processed , and wherein the surface segments of the tool thus obtained are described by display coordinates and depth coordinates associated with said respective display coordinates,
in predetermined positions of the tool along the tool path, comparing the depth coordinates of each dexel to the depth coordinates of the surface segments of the tool or the swept volume of the tool that have the same display coordinates as those ones of the dexel, and accordingly, determining for each of the dexels, the intersection points of the particular dexel and the surface segments of the tool (S130), and
keeping a dexel unchanged if the dexel has no intersection point with the tool surface (S131), or
modifying the respective parameters of a dexel if the dexel has an intersection point with one surface segment of the tool (S132), or
converting a dexel into two or more shorter dexels if the dexel has multiple intersection points with more than one of said surface segments (S133), and
thereby generating a modified three-dimensional dexel-volume representation of the workpiece at a particular position of the tool,
**characterized in that**
in the step of generating the three-dimensional multi-dexel representation of a free-formed body, each of the dexels is stored in the form of a vertex buffer describing at least the following pieces of information:
information relating to the spatial position and direction of the dexel, preferably the display coordinates of the dexel and the depth coordinate of the end points of the dexels,
geometric information relating to the workpiece surface intersected by the dexel at the starting point and the end point of the dexel, and
wherein said step of determining the intersection points of the dexels and the surface segments of the tool is performed in the graphical processing unit in a highly parallel manner.

2. The method according to claim 1, wherein for each of the dexels, information describing material characteristics of the tool is stored for the intersection points of the dexel and the tool surface.

3. The method according to claim 1, wherein the geometric information associated with the surface points of the tool includes the normal vector of said surface.

4. A method for visualization of milling simulation performed on a free-formed body, **characterized by**
generating a volume representation of a milled workpiece by means of the method according to any one of claims 1 to 3 (S600),
defining a spatial quadratic grid in the image space, the grid spacing of said grid being equal to the grid spacing applied at the generation of the dexels, and the lines of the spatial grid being aligned to the dexels (S610),
in all of the three directions, for each of the dexels belonging to a particular direction, determining the two gird points of the spatial quadratic grid between which the start point and the end point of said dexel accommodate (S620),
within the section defined by said two grid points, generating a plane square, the center of which coincides with the center of said section, and the normal vector of which faces to the grid point of said section that is not covered by said dexel, wherein the side edges of said plane square are parallel to the grid lines perpendicular to said dexel and have a length equal to the grid spacing (S630),
from among of the plane squares, which form a closed surface thus obtained, displaying those ones that are visible from the viewing point of the camera (S640), thereby visualizing the workpiece, and
in the respective position, visualizing the tool (S650).

5. The method according to claim 4, wherein the method further comprises shadowing the surface of the workpiece by using said normal vectors associated with the end points of the dexels.

6. A computer system for visualization of a milling process simulation performed on a free-formed body, the system comprising:
information input means (802),
an input interface (804) for receiving control signals representing the operation of the simulation system,
a first data storage means (805) for storing instructions and initial data to carry out the simulation method,
a CPU (806),
a graphics hardware unit (808) including a GPU (809) and a second data storage means (810), and
a display (814),
**characterized in that**
the system further comprises an output interface (812) adapted to transmit image data generated by the simulation visualization method according to claim 4 or 5 to said display (814), and
wherein said graphics hardware unit is adapted for carrying out the method according to any one of claims 1 to 3.

7. A computer program product stored in data storage medium readable by a computer, said computer program product comprising instructions which, when executed on said computer, carry out the method according to any one of claims 1 to 3.

8. A computer program product stored in data storage medium readable by a computer, said computer program product comprising instructions which, when executed on said computer, carry out the method according to claim 4 or 5.

## Patentansprüche

1. Verfahren zur Simulation von Fräsbearbeitungsprozessen, die an einem frei geformten Körper durchgeführt werden, wobei
in einer graphischen Verarbeitungseinheit eine drei-dimensionale Multi-Dexel-Darstellung eines zu bearbeitenden frei geformten Körpers erzeugt wird, indem drei orthogonale Schältiefen (depth peeling)-Algorithmen an einer vorgegebenen virtuellen Kameraposition für jede Dexel-Richtung und ein vorgegebener Rasterabstand (S110) angewandt werden,
eine Volumendarstellung des Werkzeugs oder eine Volumendarstellung des Verdrängungsvolumens des Werkzeugs erzeugt wird, unter Anwendung von drei orthogonalen Schältiefen (depth peeling)-Algorithmen (S120) und Verwendung der gleichen virtuellen Kameraposition wie für den zu bearbeitenden frei geformten Körper, wobei die Oberflächensegmente des hierbei ermittelten Werkzeugs durch Anzeigekoordinaten und den dazugehörigen Tiefen-Koordinaten beschrieben sind,
in vorgegebenen Werkzeugpositionen entlang der Werkzeugbahn ein Vergleich der Tiefen-Koordinaten eines jeden Dexels mit den Tiefen-Koordinaten der Oberflächensegmente des Werkzeugs oder des Verdrängungsvolumens des Werkzeugs, die die gleichen Anzeige-Koordinaten wie die des Dexels aufweisen, erfolgt, und dementsprechend für jedes der Dexel die Schnittpunkte des jeweiligen Dexels mit den Oberflächensegmenten des Werkzeugs bestimmt werden (S130), und
ein Dexel unverändert belassen wird, wenn das Dexel keinen Schnittpunkt mit der Werkzeugoberfläche aufweist (S131), oder
die entsprechenden Parameter eines Dexels modifiziert werden, wenn das Dexel einen Schnittpunkt mit einem Oberflächensegment des Werkzeugs aufweist (S132), oder
ein Dexel in zwei oder mehrere kürzere Dexel umgewandelt wird, wenn das Dexel mehrere Schnittpunkte mit mehr als einem der Oberflächensegmente aufweist (S133), und
damit eine modifizierte dreidimensionale Dexel-Volumendarstellung des Werkstücks an einer bestimmten Position des Werkzeugs erzeugt wird, **dadurch gekennzeichnet, dass**
in dem Schritt des Erzeugens der dreidimensionalen Multi-Dexel-Darstellung eines frei geformten Körpers jedes der Dexel in Form eines Vertexpuffers gespeichert wird, welcher zumindest die folgenden Informationen beschreibt:
Informationen bezüglich der räumlichen Position und Richtung des Dexels, vorzugsweise die Anzeigekoordinaten des Dexels und die Tiefen-Koordinate der Endpunkte des Dexels,
geometrische Informationen bezüglich der Oberfläche des Werkstücks, die von einem Dexel an dessen Start- und Endpunkt geschnitten wird, und
wobei der Schritt des Bestimmens der Schnittpunkte der Dexel mit den Oberflächensegmenten des Werkzeugs in der graphischen Verarbeitungseinheit hochparallel durchgeführt werden.

2. Verfahren gemäß Anspruch 1, wobei für jedes der Dexel an deren Schnittpunkten mit der Werkzeugoberfläche Informationen gespeichert werden, die Materialeigenschaften des Werkzeugs beschreiben.

3. Verfahren gemäß Anspruch 1, wobei die zu den Oberflächenpunkten des Werkzeugs gehörigen geometrischen Informationen den Normalvektor dieser Oberfläche enthalten.

4. Verfahren zur Visualisierung von Frässimulationen, die an einem frei geformten Körper durchgeführt werden, **gekennzeichnet durch** Erzeugen einer Volumendarstellung eines fräs-bearbeiteten Werkstücks mittels des Verfahrens nach einem der Ansprüche 1 bis 3 (S600),
Festlegen eines quadratischen Raumgitters im Bildraum, wobei der Rasterabstand des Gitters gleich dem Rasterabstand bei der Erzeugung der Dexel gewählt ist, und wobei die Linien des Raumgitters in einer Linie mit den Dexel liegen (S610),
in allen drei Richtungen und für jedes Dexel, das einer bestimmten Richtung angehört, Bestimmen der zwei Gitterpunkte des quadratischen Raumgitters zwischen denen der Start- und Endpunkt des Dexels liegt (S620),
innerhalb des Abschnitts, der **durch** die beiden Gitterpunkte definiert ist, Erzeugen einer quadratischen Fläche, deren Zentrum mit dem Zentrum des Abschnitts zusammenfällt und deren Normalvektor auf den Gitterpunkt des Abschnitts zeigt, der nicht **durch** das Dexel erfasst ist, wobei die Seitenkanten der quadratischen Fläche parallel zu den Gitterlinien verlaufen, die senkrecht zu dem Dexel angeordnet sind, und sie die gleiche Länge wie der Rasterabstand aufweisen (S630),
aus denjenigen quadratischen Flächen, die eine so ermittelte geschlossenen Oberfläche bilden, Abbilden derjenigen Flächen, die vom Betrachtungspunkt der Kamera aus sichtbar sind (S640), und damit Visualisieren des Werkstücks, und
in der entsprechenden Position, Visualisieren des Werkzeugs (S650).

5. Verfahren gemäß Anspruch 4, weiterhin umfassend das Abschatten der Oberfläche des Werkstücks durch Verwendung der Normalvektoren, die mit den Endpunkten der Dexel verbunden sind.

6. Computersystem zur Visualisierung einer Simulation von Fräsbearbeitungsprozessen, die an einem frei geformten Körper durchgeführt werden, wobei das System umfasst:
Eingabeeinrichtungen für Informationen (802),
eine Eingabeschnittstelle (804), um Kontrollsignale zu erhalten, die den Betrieb des Simulationssystems zeigen,
eine erste Datenspeichereinrichtung (805), um Befehle und Ausgangsdaten für die Durchführung des Simulationsverfahrens zu speichern,
ein CPU (806),
eine Grafik-Hardwareeinheit (808) enthaltend eine GPU (809) und eine zweite Datenspeichereinrichtung (810), und
eine Anzeigevorrichtung (814),
**dadurch gekennzeichnet, dass**
das System des Weiteren eine Ausgangsschnittstelle (812) umfasst, die dafür geeignet ist, um die durch das Simulations-Visualisierungsverfahren gemäß Anspruch 4 oder 5 erzeugten Bilddaten an die Anzeigevorrichtung (814) zu übertragen, und
wobei die Grafik-Hardwareeinheit (808) zur Ausführung des Verfahrens nach einem der Ansprüche 1 bis 3 geeignet ist.

7. Computerprogramm, das auf einem Datenspeichermedium gespeichert ist, das von einem Computer gelesen werden kann, wobei das Computerprogramm Befehle umfasst, die, wenn sie auf dem Computer ausgeführt werden, das Verfahren nach einem der Ansprüche 1 bis 3 ausführen.

8. Computerprogramm, das auf einem Datenspeichermedium gespeichert ist, das von einem Computer gelesen werden kann, wobei das Computerprogramm Befehle umfasst, die, wenn sie auf dem Computer ausgeführt werden, das Verfahren gemäß Anspruch 4 oder 5 ausführen.

## Revendications

1. Procédé pour la simulation d'un procédé de broyage effectuée sur un corps librement formé, **caractérisé par**
la génération d'une représentation multi-dexel tridimensionnelle d'un corps à traiter librement formé dans une unité de matériel graphique, en utilisant trois algorithmes orthogonaux de pelage profonde à une position de caméra virtuelle prédéterminé pour chaque direction d'un dexel et un espacement de grille prédéterminé (S110),
la génération d'une représentation du volume de l'outil ou d'une représentation du volume cylindré de l'outil en utilisant trois algorithmes orthogonaux de pelage profonde (S120) avec les mêmes positions de la caméra virtuelle comme appliquées pour ledit corps à traiter librement formé , et dans lequel les segments de surface de l'outil ainsi obtenu ainsi sont décrits par des coordonnées d'affichage et des coordonnées de profondeur associé aux lesdites coordonnées d'affichage respectives,
dans des positions prédéterminées de l'outil le long du trajectoire de l'outil, la comparaison des coordonnées de profondeur de chaque dexel avec les coordonnées de profondeur des segments de surface de l'outil ou avec le volume cylindré de l'outil qui ont les mêmes coordonnées d'affichage que ceux-ci du dexel, et, en conséquence, la détermination pour chacun des dexels, les points d'intersection du dexel particulier et les segments de surface de l'outil (S130) et garder un dexel inchangé si le dexel n'a pas de point d'intersection avec la surface de l'outil (S 131), ou
la modification des paramètres respectifs d'un dexel si la dexel a un point d'intersection avec un segment de surface de l'outil (S 132), ou
la conversion d'un dexel en deux ou plus dexels plus courts si le dexel comporte plusieurs points d'intersection avec plus qu'un desdits segments de surface (S133), et
ainsi générant une représentation multi-dexel tridimensionnelle modifiée de la pièce en usinage à une position particulière de l'outil,
**caractérisé en ce que**
dans l'étape de génération la représentation multi-dexel tridimensionnelle d'un corps librement formé, chacun des dexels est mis en mémoire sous forme d'un tampon apex décrivant au moins les pièces d'informations suivantes:
des informations relatives à la position spatiale et à la direction du dexel, de préférence les coordonnées d'affichage du dexel et la coordonnée de profondeur des points d'extrémité des dexels,
des informations géométriques relatives à la surface de la pièce en usinage coupée par le dexel au point de départ et le point limite du dexel, et
dans lequel ladite étape de la détermination des points d'intersection des dexels et des segments de surface de l'outil est effectuée dans la unité de matériel graphique de manière hautement parallèle.

2. Procédé selon la revendication 1, dans lequel, pour chacun des dexels, des informations décrivant les caractéristiques du matériau de l'outil est mis en mémoire pour les points d'intersection du dexel et de la surface de l'outil.

3. Procédé selon la revendication 1, dans lequel les informations géométriques associées à des points de surface de l'outil comprend le vecteur normal de ladite surface.

4. Procédé pour la visualisation de simulation de broyage effectuée sur un corps formé librement, **caractérisé par**
la génération d'une représentation d'un volume d'une pièce en usinage broyé par le procédé selon l'une quelconque des revendications 1 à 3 (S600),
la définition d'une grille carrée spatiale dans l'espace de l'image, l'espacement de grille de ladite grille étant égal à l'espacement de grille appliquée à la génération des dexels, et les lignes de la grille spatiale étant alignées sur les dexels (S610),
dans l'ensemble des tous les trois directions, pour chacun des dexels appartenant à une direction particulière, en déterminant les deux points de grille carrée spatiale entre le point de départ et le point limite de ladite dexel accommodent (S620),
dans la section définie par lesdits deux points de la grille, la génération d'un plan carré, dont le centre coïncide avec le centre de ladite section, et son vecteur normal fait face à la pointe de grille de ladite section qui n'est pas recouverte par ledit dexel, dans lequel les bords latéraux du ledit carré plane sont parallèles aux lignes de la grille qui sont perpendiculaire à ledit dexel et ont une longueur égale à l'espacement de la grille (S630),
parmi des carrés planes, qui forment une surface fermée ainsi obtenue, l'affichage de ceux-ci qui sont visibles à partir du point d'observation du caméra (S640), ainsi visualisant la pièce en usinage, et
dans la position respective, la visualisation de l'outil (S650).

5. Procédé selon la revendication 4, dans lequel le procédé comprend en outre l'ombrage de la surface de la pièce en usinage en utilisant lesdits vecteurs normaux associés avec les extrémités des dexels.

6. Un système d'ordinateur pour la visualisation d'une simulation d'un procédé de broyage effectuée sur un corps librement formé, ledit système comprenant:
des moyens d'entrée d'informations (802),
une interface d'entrée (804) pour recevoir des signaux de commande représentant l'opération du système de simulation,
un premier moyen de stockage de données (805) pour mettre en mémoire des instructions et des données initiales nécessaires pour exécuter le procédé de simulation,
une unité centrale (806),
une unité de matériel graphique (808) comprenant un processeur graphique (809) et un second moyen de stockage de données (810),
une console de visualisation (814),
**caractérisé en ce que**
le système comprenant en outre une interface de sortie (812) adapté pour transmettre des données d'image générées par le procédé de simulation de visualisation selon la revendication 4 ou 5, à ladite console de visualisation (814), et
dans lequel ladite unité matérielle graphique étant adaptée pour l'exécution du procédé selon l'une quelconque des revendications 1 à 3,

7. Produit programme d'ordinateur mis en mémoire dans un support de données lisibles par un ordinateur, ledit produit programme d'ordinateur comprenant des instructions qui, lorsqu'elles sont exécutées sur ledit ordinateur, exécutent le procédé selon l'une quelconque des revendications 1 à 3.

8. Produit programme d'ordinateur mis en mémoire dans un support de données lisibles par un ordinateur, ledit produit programme d'ordinateur comprenant des instructions qui, lorsqu'elles sont exécutées sur ledit ordinateur, exécutent le procédé selon la revendication 4 ou 5.
